# EUROPEAN PATENT SPECIFICATION

(11) **EP 3 231 666 B1**
(45) Date of publication and mention of the grant of the patent: **23.09.2020**
(21) Application number: 14907932.9
(22) Date of filing: 08.12.2014
(51) Int. Cl.: B60N 3/06, B60K 26/02

(54) **SLIDING-TYPE HEEL PAD WITH HEIGHT ADJUSTMENT FUNCTION**
VERSCHIEBBARES FERSENPOLSTER MIT HÖHENVERSTELLUNGSFUNKTION
SUPPORT DE TALON DE TYPE COULISSANT AVEC FONCTION DE RÉGLAGE DE HAUTEUR

(43) Date of publication of application: 18.10.2017
(73) Proprietor: Volvo Truck Corporation, 405 08 Gothenburg (SE)
(72) Inventor: YAHAGI, Tsubasa, Ageo-shi, Saitama 362-8523 (JP)
(74) Representative: Valea AB
(86) International application number: PCT/JP2014/006114
(87) International publication number: WO 2016/092585

(56) References cited:
- EP-A2- 1 892 181
- WO-A1-2006/043737
- JP-A- S6 378 840
- JP-A- H10 203 224
- JP-A- H10 203 224
- JP-A- 2009 208 636
- JP-A- 2009 214 582
- JP-A- 2009 214 582
- JP-U- S6 376 553
- JP-U- S6 376 553
- US-A- 1 698 140

## Description

### TECHNICAL FIELD

The present invention relates to a sliding-type heel pad with height adjustment function.

### BACKGROUND ART

Trucks, available as large- or medium-sized vehicles, have a raised portion at the back of a floor panel that constitutes a cabin above the front wheels, and seats for a driver and a passenger are on the raised portion. A driver, of average body size, driving such a truck can sit in the seat with feet on the floor panel or can step down on (depress) an accelerator or brake pedal by toes while keeping the heel on the floor panel. On the other hand, a driver, of smaller than the average body size, driving such a truck sits in the seat with only the toes on the floor panel. During driving, the driver has to step on the accelerator or brake pedal by the toes with the heels away from the floor panel. Accordingly, it is difficult for a driver of smaller than the average body size to drive keeping oneself in an optimum, comfortable posture.

As a solution to the above problem, some devices (systems) are devised to, upon adjusting the seat position, for example, adjust the positions of the accelerator pedal and brake pedal, as well as adjust the position or height of the panel that the driver's heel touches when the driver steps on the accelerator or brake pedal (see Patent Document 1). Besides the above solution, it is also devised to provide the floor panel with a heel pad that allows a driver to step on the accelerator or brake pedal with the heel on the pad.

### REFERENCE DOCUMENT LIST

### PATENT DOCUMENT

Patent Document 1: Japanese Patent No. 4479233
Patent document 2: US Patent No. 1,698,140

### SUMMARY OF THE INVENTION

### PROBLEMS TO BE SOLVED BY THE INVENTION

For example, the system disclosed in Patent Document 1 can adjust the position of the pedal or panel together with the positional alignment of the seat, whereby a driver can assume the optimum posture regardless of body size. This configuration is convenient but is complicated. Also, large- or medium-sized vehicles such as a truck have limits in positional alignment of the seat compared with any common type of vehicle. This makes it difficult to apply to such a vehicle the system of Patent Document 1 that adjusts the position of the pedal or panel together with the positional alignment of the seat.

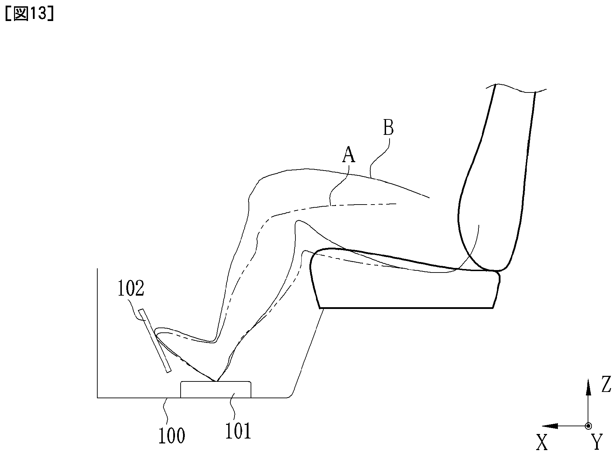

On the other hand, the heel pad placed on the floor panel is advantageous in terms of its simpler configuration and lower installation costs than the device of Patent Document 1. Consider the case of installing a heel pad of such height as ensures a driver A of smaller than the average body size can put the heel on the panel while touching the toes with the pedal. In this case, as shown in FIG. 13, the driver A of smaller than the average body size can step on a pedal 102 with the heel on a heel pad 101 placed on a floor panel 100 and thus can drive in a comfortable posture.
Regarding a driver B of average or larger body size, however, when the heel touches the heel pad 101, the knee is raised by the thickness (height) of the heel pad 101 and bent sharply compared with when the heel touches the floor panel 100. Hence, in case the driver B of average or larger body size drives the vehicle, it is more likely that the driver has to step on the pedal with the heel on the heel pad 101 in an uncomfortable posture.

### MEANS FOR SOLVING THE PROBLEMS

The present invention has been accomplished to solve some of the above problems and it is accordingly an object of the present invention to provide a sliding-type heel pad with height adjustment function that ensures a driver can drive a vehicle in an optimum posture regardless of body size.

The sliding-type heel pad with height adjustment function according to the present invention comprises the technical features of claim 1.

Furthermore, the operation part is preferably an operation button that is disposed on the pad main body and depressed by the driver's foot.

Furthermore, the sliding-type heel pad is characterized in that the upper surface of the pad main body is preferably a surface that gradually decreases in height from the floor panel from the pedal side to the driver's seat side.

In this case, the upper surface of the pad main body is preferably a step-like surface that is a combination of at least two or more surfaces at different heights from the floor panel.

### EFFECTS OF THE INVENTION

According to the present invention, a driver can drive a vehicle in an optimum posture, regardless of body size.

### BRIEF DESCRIPTION OF THE DRAWINGS

FIG. 1 is an explanatory view showing leg conditions when the heel touches a footboard at a smaller height from a floor panel in a sliding-type heel pad according to an embodiment of the present invention.
FIG. 2 is an explanatory view showing leg conditions when a driver D of smaller than the average body size puts the heel on the footboard at a smaller height from the floor panel in the sliding-type heel pad according to an embodiment of the present invention.
FIG. 3 is a perspective view showing an example of the sliding-type heel pad according to an embodiment of the present invention.
FIG. 4 is an exploded perspective view showing an example of a sliding mechanism and stopper mechanism.
FIG. 5A is an exploded sectional view showing the configuration of an operation button and its surroundings, FIG. 5B is a sectional view showing the operation button in a first position and its surroundings, and FIG. 5C is a sectional view showing the operation button in a second position and its surroundings.
FIG. 6 is a perspective view showing the sliding mechanism when the operation button is in the first position.
FIG. 7 is a partial sectional view showing a swinging member when the operation button is in the first position.
FIG. 8 is a perspective view showing the sliding mechanism when the operation button is in a second position.
FIG. 9 is a partial sectional view showing the swinging member when the operation button is in the second position.
FIG. 10 is an exploded perspective view showing the configuration of the sliding-type heel pad with a foot lever.
FIG. 11 is a perspective view of a sliding-type heel pad when the stopper mechanism functions.
FIG. 12 is a perspective view of a sliding-type heel pad when the stopper mechanism does not function.
FIG. 13 shows leg conditions when a driver A of smaller than the average body size or driver B of average body size steps on a pedal using a heel pad with the same height from the floor panel.

### MODE FOR CARRYING OUT THE INVENTION

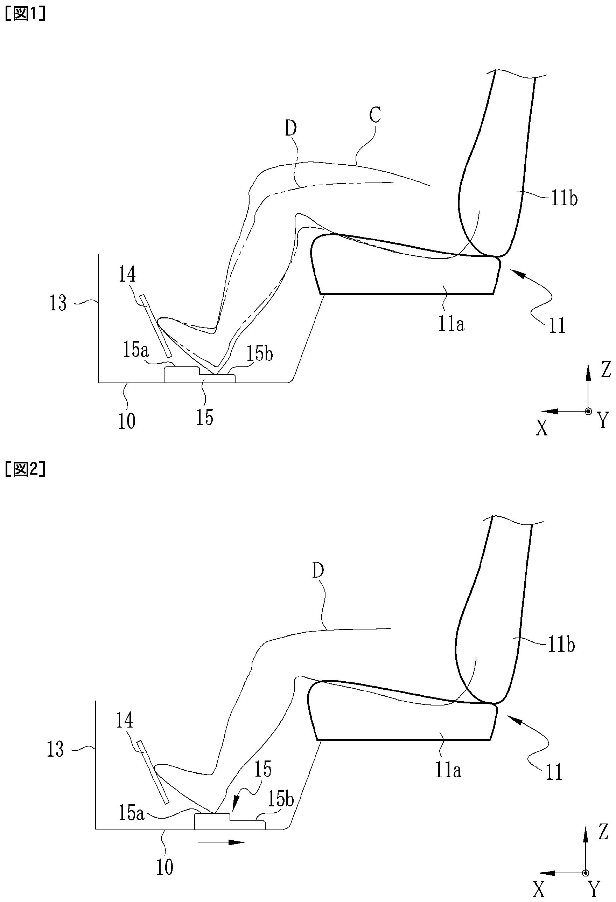

A sliding-type heel pad according to the present invention will be described below. A large- or medium-sized vehicle, typically, a truck (hereinafter referred to as 'vehicle') has a cabin above front wheels. As shown in FIG. 1, a floor panel 10 that forms the floor of the cabin is raised upward at the back of the cabin. The raised portion constitutes a housing for the front wheels. A seat 11 is placed on the raised portion of the floor panel 10. The seat 11 includes a seat portion 11a and a backrest 11b and allows positional alignment of the seat portion 11a in the front-back direction (X direction) and angle adjustment for the backrest 11b.

A pedal 14, such as an accelerator or brake pedal, is disposed above the floor panel 10 as well as near a dashboard lower panel (dashboard panel) 13. Also, the floor panel 10 is provided with a sliding-type heel pad 15.

The sliding-type heel pad 15 slidably moves toward the pedal 14 (X direction) or away from the pedal 14 (-X direction) so as to adjust at two levels the height of a footboard on which a driver puts the heel. For example, when a driver C of average or larger body size drives the vehicle, the position of the sliding-type heel pad 15 is adjusted so that the driver can put the heel on a footboard 15b at a smaller height from the floor panel 10 out of footboards 15a, 15b of the sliding-type heel pad 15.

On the other hand, if the driver D of smaller than the average body size steps on the pedal 14, trying to put the heel on the footboard 15b at a smaller height from the floor panel 10 out of the footboards 15a, 15b of the sliding-type heel pad 15, the heel cannot touch there dangling in the air (as indicated by double-dashed line in FIG. 1). Thus, as shown in FIG. 2, in case a driver D of smaller than the average body size drives, the position of the sliding-type heel pad 15 is adjusted so that the driver can put the heel on the footboard 15a at a larger height from the floor panel 10 out of the footboards 15a, 15b of the sliding-type heel pad 15.

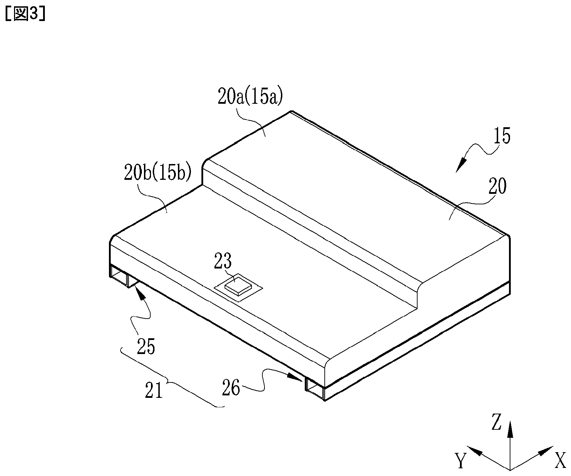

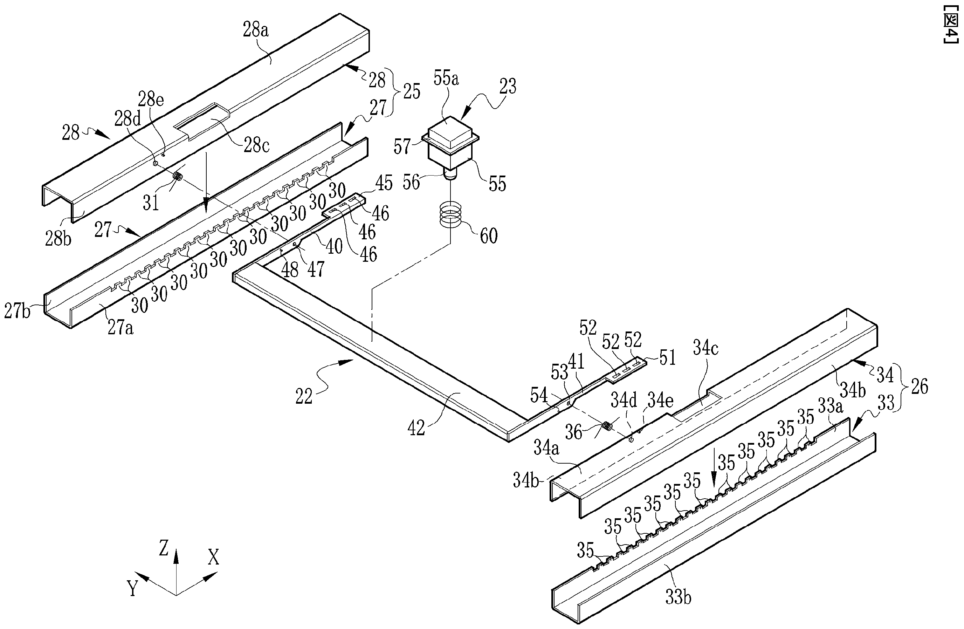

As shown in FIGS. 3 and 4, the sliding-type heel pad 15 includes a pad main body 20, a sliding mechanism 21, a stopper mechanism 22, and an operation button 23. The pad main body 20 has a two-step upper surface that is a combination of two upper surfaces 20a, 20b at different heights from the floor panel 10. Here, the upper surface 20a forms the footboard 15a on which a driver of smaller than the average body size puts the heel during driving. Also, the upper surface 20b forms the footboard 15b on which a driver of average or larger body size puts the heel during driving. These upper surfaces 20a, 20b are set on the pedal 14 side and on the seat 11 side, respectively.

The height from the floor panel 10 to the upper surface 20a and the height from the floor panel 10 to the upper surface 20b are obtained based on experiments, statics, etc. To give an example, the height from the floor panel 10 to the upper surface 20a is set to, for example, 45 mm, and the height from the panel 10 to the upper surface 20b is set to, for example, 15 mm.

In the above example, the upper surface of the floor panel 10 has a two-step form, but it only has to reduce its height from the pedal-side end to the seat-side end.

In other words, the upper surface of the floor panel 10 may have a step-like form of, for example, three or more levels or alternatively may form the surface inclined or curved downward from the pedal 14 side to the seat 11 side.

The sliding mechanism 21 and the stopper mechanism 22 are disposed below the pad main body 20. Conceivable examples of the sliding mechanism 21 include two pairs of rails, i.e., rail pairs 25, 26 provided at opposite ends of the pad main body 20 in the width direction (Y direction). The rail pair 25 includes a panel-side rail 27 fixed to the floor panel 10 and a pad-side rail 28 fixed to the underneath of the pad main body 20. The panel-side rail 27 is, for example, a rail open at its upper surface. At the upper end of a side wall 27a of the panel-side rail 27, plural locking pieces 30 are provided at regular intervals along the longitudinal direction (X direction) of the panel-side rail 27.

The pad-side rail 28 is, for example, a rail open at its lower surface and its opposite end surfaces in the longitudinal direction. The pad-side rail 28 has an opening 28c that is formed at substantially the center in the longitudinal direction (X direction) over a region from the upper surface 28a to the side surface 28b. When the panel-side rail 27 is inserted into the pad-side rail 28, the opening 28c exposes some of the locking pieces 30 of the panel-side rail 27.

The opening 28c receives an engagement piece 45 of a swinging member 40 constituting the stopper mechanism 22, as described below. Once the engagement piece 45 of the swinging member 40 has been inserted therein, engagement holes 46 formed in the engagement piece 45 engage with the locking pieces 30 exposed from the opening 28c.

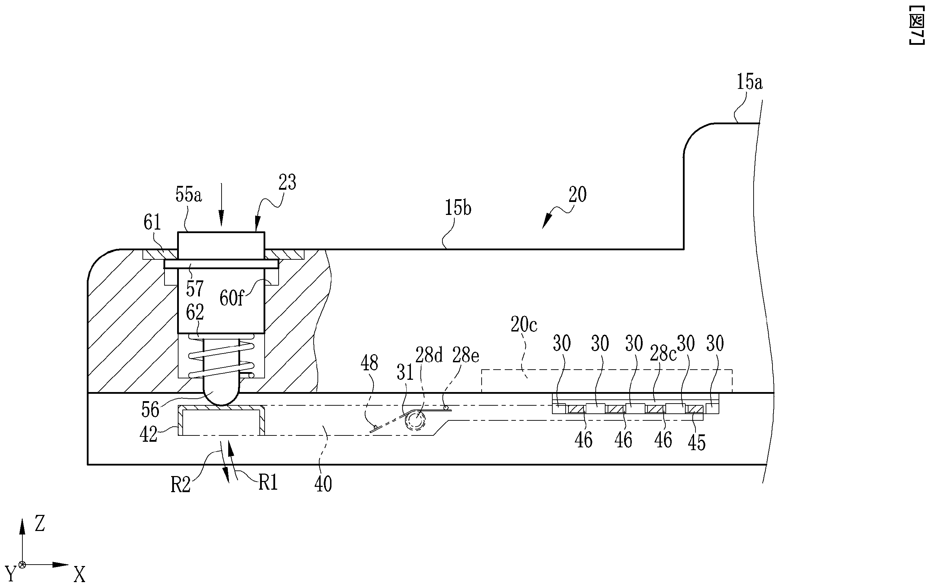

The aforementioned side surface 28b of the pad-side rail 28 is equipped with a rib 28d for oscillatably holding the swinging member 40, and a pin 28e that comes into contact with one end of a coil spring 31 attached to the rib 28d. The coil spring 31 depresses the swinging member 40 toward the R1 direction of FIG. 7.

Similar to the rail pair 25, the rail pair 26 includes a panel-side rail 33 fixed to the floor panel 10 and a pad-side rail 34 fixed to the underneath of the pad main body 20. The panel-side rail 33 is, for example, a rail open at its upper surface. At the upper end of a side wall 33a of the panel-side rail 33, plural locking pieces 35 are formed at regular intervals along the longitudinal direction (X direction) of the panel-side rail 33.

The pad-side rail 34 is, for example, a rail open at its lower surface and its opposite end surfaces in the longitudinal direction. The pad-side rail 34 has an opening 34c formed at substantially the center in the longitudinal direction (X direction) over a region from the upper surface 34a to the side surface 34b. When the panel-side rail 33 is inserted into the pad-side rail 34, the opening 34c exposes some of the locking units pieces 35 of the panel-side rail 33.

The opening 34c receives an engagement piece 51 of a swinging member 41 that constitutes the stopper mechanism 22. Once the engagement piece 51 of the swinging member 41 has been inserted into the opening 34c, engagement holes 52 formed in the engagement piece 51 engage with the locking pieces 35 exposed from the opening 34c.

The aforementioned side surface 34b of the pad-side rail 34 is equipped with a rib 34d for oscillatably holding the swinging member 41 and a pin 34e that comes into contact with one end of a coil spring 36 attached to the rib 34d. The coil spring 36 depresses the swinging member 41 in the R1 direction of FIG. 7.

The stopper mechanism 22 is composed of the plural locking pieces 30 formed in the panel-side rail 27 and the plural locking pieces 35 formed in the panel-side rail 33 as well as the swinging members 40, 41 and a coupling member 42. The swinging member 40 has the engagement piece 45 at one end in the longitudinal direction, which protrudes in the Y direction. The engagement piece 45 includes three engagement holes 46 arranged at regular intervals. The three engagement holes 46 are engaged with the locking pieces 30 that exist on the motion trajectories of the respective engagement holes 46 out of the plural locking pieces 30 formed in the floor-side rail 27. The size of the three engagement holes 46 is set so as to receive the locking pieces 30 that exist on the motion trajectories of the respective engagement holes 46 when the swinging member 40 oscillates. Here, the number of engagement holes formed in the engagement piece 45 is not limited to three and one or more holes suffice for the purpose.

The swinging member 40 has an opening 47 at substantially the center in the longitudinal direction. In the opening 47, inserted is a fastener (not shown) for attaching the swinging member 40 to the pad-side rail 28. The fastener is fixed to the rib 28d disposed on the side surface 28b of the pad-side rail 28. A pin 48 is provided in the vicinity of the opening 47. The one end of the coil spring 31 attached to the rib 28d comes into contact with the pin 48 from below.

Likewise, the swinging member 41 has an engagement piece 51 at one end in the longitudinal direction, which protrudes in the -Y direction. The engagement piece 51 has three engagement holes 52 arranged at regular intervals. The three engagement holes 52 engage with the locking pieces 35 existing on the motion trajectories of the respective engagement holes 52 out of the locking pieces 35 formed in the floor-side rail 33. The size of each engagement hole 52 is set so as to receive a corresponding locking piece 35 when the swinging member 41 oscillates. Here, the number of engagements hole 52 formed in the engagement piece 51 is not limited to three and one or more holes suffice for the purpose.

The swinging member 41 has an opening 53 at substantially the center in the longitudinal direction. A fastener (not shown) is inserted into the opening 53 so as to attach the swinging member 41 to the pad-side rail 34. The fastener is fixed to the rib 34d disposed on the side surface 34b of the pad-side rail 34. A pin 54 is provided in the vicinity of the opening 53. The one end of the coil spring 36 attached to the rib 34d comes into contact with the pin 54 from below.

The coupling member 42 is a member for coupling the swinging members 40 and 41 together. One end of the coupling member 42 in the longitudinal direction is fixed to the other end of the swinging member 40 opposite to the one end with the engagement piece 45. In addition, the other end of the coupling member 42 in the longitudinal direction is fixed to the other end of the swinging member 41 opposite to the one end with the engagement piece 51.

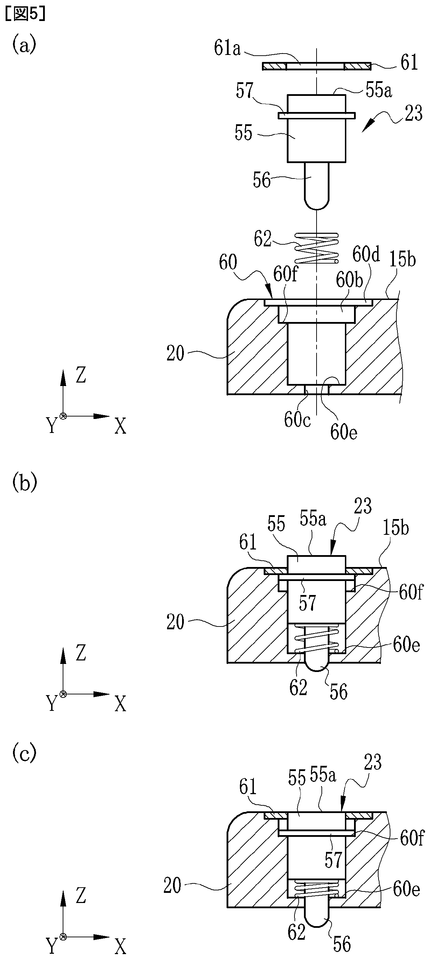

The operation button 23 is an operation member to be depressed by the foot (specifically, heel) when sliding the pad main body 20 toward or away from the pedal 14. The operation button 23 is provided on the footboard 15b of the pad main body 20. The operation button 23 is movable between a first position (see FIG. 5B) at which the button protrudes from the footboard 15b and a second position (see FIG. 5C) that the button reaches when depressed from the first position by a predetermined amount.

As shown in FIG. 5A, the operation button 23 is composed of, for example, a rectangular button main body 55 and a pin-like depressing portion 56 disposed below the button main body 55. At the upper end of the button main body 55, a stopper piece 57 is formed throughout the outer periphery thereof. The operation button 23 is fit in a receiving hole 60 formed in the footboard 15b of the pad main body 20. The receiving hole 60 is composed of a first hole 60a into which the button main body 55 is inserted, a second hole 60b into which the stopper piece 57 is inserted, a third hole 60c into which the depressing portion 56 is inserted, and a groove portion 60d into which an anti-drop cover 61 is inserted. Here, reference symbol 61a indicates an opening formed in the anti-drop cover 61. The upper end of the button main body 55 is inserted thereinto.

As shown in FIG. 5B, after the operation button 23 has been fit in the receiving hole 60 with the depressing portion 56 inserted into the coil spring 62, the anti-drop cover 61 is inserted to the groove portion 60d. Once the operation button 23 has been fit in the receiving hole 60, the lower end of the coil spring 62 comes into contact with a step portion 60e defined by the first hole 60a and the third hole 60c, and the upper end of the coil spring 62 comes into contact with a lower surface of the button main body 55. Accordingly, the operation button 23 fit in the receiving hole 60 is biased by the coil spring 62 and secured in position with the upper surface of the stopper piece 57 in contact with the lower surface of the anti-drop cover 61. The position of the operation button 23 in this state is a first position. When the operation button 23 is set to the first position, the upper surface (surface to be depressed) 55a of the button main body 55 protrudes from the footboard 15b of the pad main body 20 by a predetermined amount. Also, the tip end of the depressing portion 56 of the operation button 23 protrudes from the lower surface of the pad main body 20.

As shown in FIG. 5C, when being depressed, the operation button 23 moves downward (-Z direction) against the biasing force from the coil spring 62. For example, if the operation button 23 is depressed down to the position at which the surface to be depressed 55a of the operation button 23 is flush with the upper surface of the anti-drop cover 61, the lower surface of the stopper piece 57 comes into contact with a step portion 60f defined by the first hole 60a and the second hole 60b. The position of the operation button 23 in this state is the second position. In case the operation button 23 is depressed down to the second position, the protrusion amount of the depressing portion 56 from the lower surface of the pad main body 20 is larger than at the first position.

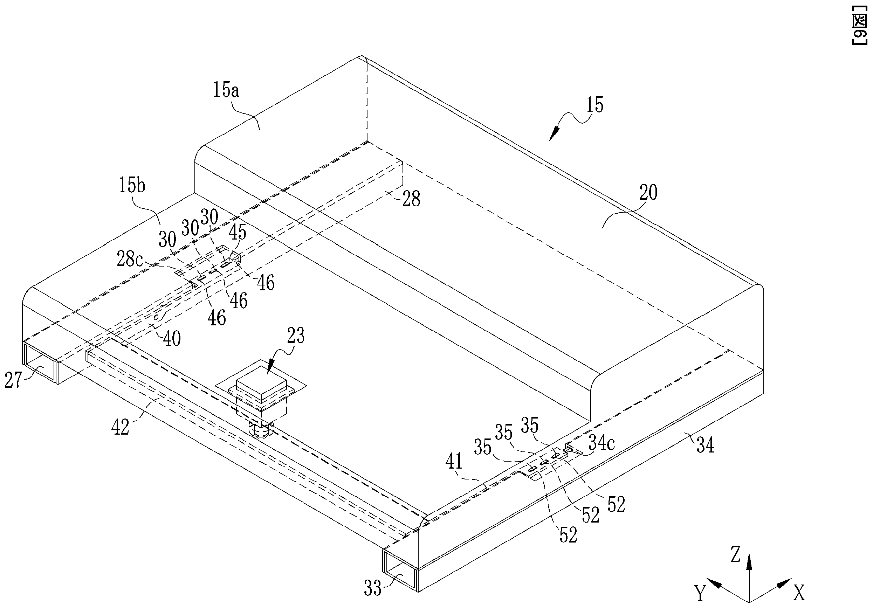

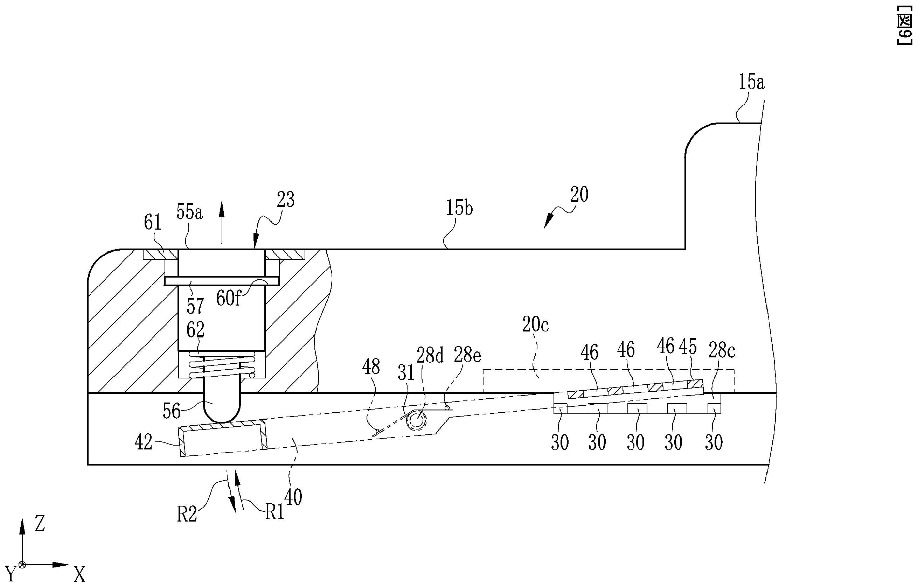

Referring to FIGS. 6-9, a description is given next of an example where the pad main body 20 of the sliding-type heel pad 15 of this embodiment is slid to adjust the height of the footboard. FIGS. 7 and 9 show the swinging member 40. In FIGS. 7 and 9, only the coupling member 42 and the engagement piece 45 of the swinging member 40 are indicated by solid line, and the other portions of the swinging member 40 are indicated by double-dashed line.

As shown in FIGS. 6 and 7, when the operation button 23 is not depressed, the operation button 23 is held in the first position. The coil spring 31 attached to the rib 28d biases the swinging member 40 in the R1 direction of FIG. 7, and the coil spring 36 attached to the rib 34d biases the swinging member 41 in the R1 direction of FIG. 7. Hence, the coupling member 42 connected with the swinging members 40, 41 is also biased to the R1 direction of FIG. 7. The operation button 23 held in the first position, however, restricts the turning of these members in the R1 direction.

When the operation button 23 is held in the first position, the three engagement holes 46 formed in the engagement piece 45 of the swinging member 40 engage with corresponding locking pieces 30 existing on the motion trajectories of the three engagement holes 46 of the swinging member 40 out of the locking pieces 30 of the panel-side rail 27. At the same time, the three engagement holes 52 formed in the engagement piece 51 of the swinging member 41 engage with corresponding locking pieces 35 existing on the motion trajectories of the three engagement holes 52 of the swinging member 41 out of the locking pieces 35 of the panel-side rail 33. Accordingly, when the operation button 23 is held in the first position, the sliding mechanism 22 functions, inhibiting the sliding movement of the pad main body 20.

When the operation button 23 is depressed by the driver's heel, the operation button 23 is moved downward (-Z direction) against the biasing force of the coil spring 62. Subsequently, when the stopper piece 57 comes into contact with the step portion 60f of the receiving hole 60, the downward movement of the operation button 23 is restricted. As a result, the operation button 23 is held in the second position (see FIG. 9).

If the operation button 23 moves downward from the first position after being depressed by the heel, the depressing portion 56 of the operation button 23 protruding from the lower surface of the pad main body 20 depresses the coupling member 42. When the depressing portion 56 of the operation button 23 depresses the coupling member 42, the coupling member 42 turns around the rib 28d where the swinging member 40 is held and the rib 34d where the swinging member 41 is held in the R2 direction of FIG. 7 together with the swinging members 40, 41.

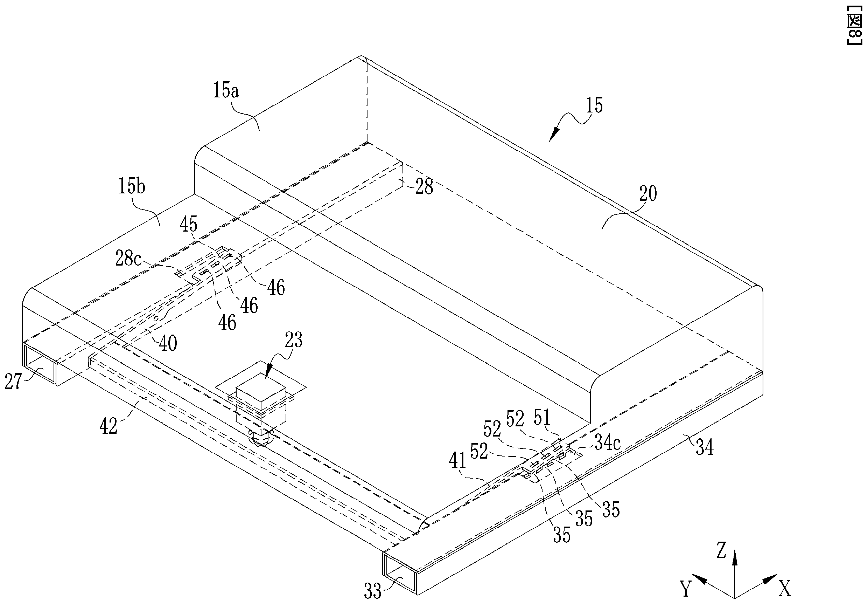

When the swinging member 40 turns in the R2 direction of FIG. 7, the engagement piece 45 of the swinging member 40 separates from the locking piece 30 of the panel-side rail 27, whereby the respective engagement holes 46 of the engagement piece 45 disengage from the respective locking pieces 30 of the panel-side rail 27 that have been engaged with the engagement holes 46 (see FIGS. 8 and 9).

As the swinging member 40 turns in the R2 direction, the swinging member 41 also turns in the R2 direction. The turning of the swinging member 41 in the R2 direction makes the engagement piece 51 of the swinging member 41 apart from the locking piece 35 of the panel-side rail 33. The turning of the swinging member 41 in the R2 direction disengages the respective engagement holes 52 of the engagement piece 51 from the locking pieces 35 of the panel-side rail 33 that have been engaged with the engagement holes 52. Here, the engagement pieces 45, 51 of the swinging members 40, 41 turned in the R2 direction enter into a recess 20c formed at the bottom of the pad main body 20.

Accordingly, if the operation button 23 is depressed, the function of the sliding mechanism 22 is disabled, whereby the pad main body 20 can slidably move toward or away from the pedal 14.

A driver slidably moves the pad main body 20 toward or away from the pedal 14 while continuously depressing the operation button 23 using the heel. When the pad main body 20 is slidably moved to a desired position, the driver releases the heel from the operation button 23.

As shown in FIG 9, when the operation button 23 is released from being depressed by the heel, the operation button 23 at the second position moves upward (Z direction) by means of restoring force of the coil spring 60. Then, the operation button 23 moves to a position where the stopper piece 57 of the button main body 55 comes into contact with the anti-drop cover 61 (see FIG. 7).

As a result of upward movement of the operation button 23, the depressing portion 56 no longer depresses the coupling member 42. As described above, the swinging member 40 is biased by the coil spring 31. Also, the swinging member 41 is biased by the coil spring 36. Accordingly, when the operation button 23 is raised, the swinging members 40, 41 turn in the R1 direction of FIG. 9 by means of the restoring force of the coil springs 31, 36. Together with the turning of these two swinging members 40, 41 in the R1 direction, the coupling member 42 also turns in the R1 direction of FIG. 9. Therefore, upon the upward movement of the operation button 23, the coupling member 42 is moved while in contact with the depressing portion 56 of the operation button 23.

When the stopper piece 57 of the operation button 23 comes into contact with the anti-drop cover 61, the operation button 23 stops moving upward and is held in the first position. If the operation button 23 is held in the first position, the turning of the coupling member 42 in the R1 direction is stopped as well.

When the operation button 23 is being raised toward the first position, the swinging members 40, 41 turn in the R1 direction of FIG. 9. The turning of the swinging member 40 in the R1 direction of FIG. 9 makes the engagement piece 45 move toward the locking piece 30 exposed from the opening 28c of the pad-side rail 28. Then, if any locking pieces 30 exist on the motion trajectories of corresponding ones of the engagement holes 46 formed in the turned engagement piece 45, these locking pieces 30 are inserted into the engagement holes 46 of the engagement piece 45. Accordingly, the respective engagement holes 46 engage with the locking pieces 30 corresponding to the engagement holes 46 (see FIG. 7).

Concurrently with the turning of the swinging member 40 in the R1 direction of FIG. 9, the swinging member 41 also turns in the R1 direction. Owing to the turning of the swinging member 41 in the R1 direction of FIG. 9, the engagement piece 51 moves toward the locking piece 35 exposed from the opening 34c of the pad-side rail 34. Then, if any locking pieces 35 exist on the motion trajectories of corresponding ones of the engagement holes 52 formed in the turned engagement piece 51, these locking pieces 35 are inserted into the engagement holes 52 of the engagement piece 51. Accordingly, the respective engagement holes 52 engage with the locking pieces 35 corresponding to the engagement holes 52.

Depending on the position of the slidably moved pad main body 20, the position of the locking piece 30 formed in the panel-side rail 27 may be out of the motion trajectories of the engagement holes 46 of the engagement piece 45 of the swinging member 40. In such a case, the locking piece 30 formed in the panel-side rail 27 is not inserted into the engagement hole 46 of the engagement piece 45 of the swinging member 40. As a result, the engagement piece 45 of the swinging member 40 comes into contact with the locking piece 30 formed in the panel-side rail 27. The same applies to the swinging member 41. Thus, the function of the stopper mechanism 22 is disabled. In this case, the pad main body 20 is slidably moved toward or away from the pedal 14. The sliding movement releases the engagement piece 45 of the swinging member 40 from being in contact with the locking piece 30 formed in the panel-side rail 27 and then, the locking piece 30 formed in the panel-side rail 27 is inserted into the engagement hole 46 of the engagement piece 45 of the swinging member 40. Hence, the stopper mechanism 22 functions.

As described above, as a result of raising the operation button 23 from the second position to the first position, the sliding mechanism 22 can function again to restrict sliding movement of the pad main body 20 toward or away from the pedal 14.

Just by slidably moving the pad main body 20 with the operation button 23 being depressed by the driver's foot, the position of the pad main body 20 as well as the height of the footboard of the sliding-type heel pad 15 can be easily adjusted at the same time. Also, if a driver wants to hold the pad main body 20 in a desired position, the driver has only to release the foot from the operation button 23. Hence, the driver can adjust the height of the footboard according to body form.

The configuration of the sliding mechanism discussed in the above embodiment is merely given as an example, and any other sliding mechanism is possibly used. Examples of such sliding mechanisms include the one configured by combining a T- or I-shaped rail in cross-section with a rail capable of fitting in the rail from the outside thereof, and the one configured by combining a wheel attached to the pad main body with a panel-side rail that is open at its upper surface to receive the wheel.

The same applies to the stopper mechanism. For example, the stopper mechanism may be composed of a latch provided along the longitudinal direction of a rail, and a latch hook capable of engaging with the latch.

In this embodiment, two rail pairs are independently provided with the swinging member, but only one rail pair may have the swinging member.

In this embodiment, in order to disable the function of the stopper mechanism, the operation button 23 is depressed by way of an example. However, an operation lever (foot lever) that is operable by the driver's foot (specifically, heel) can replace the operation button 23.

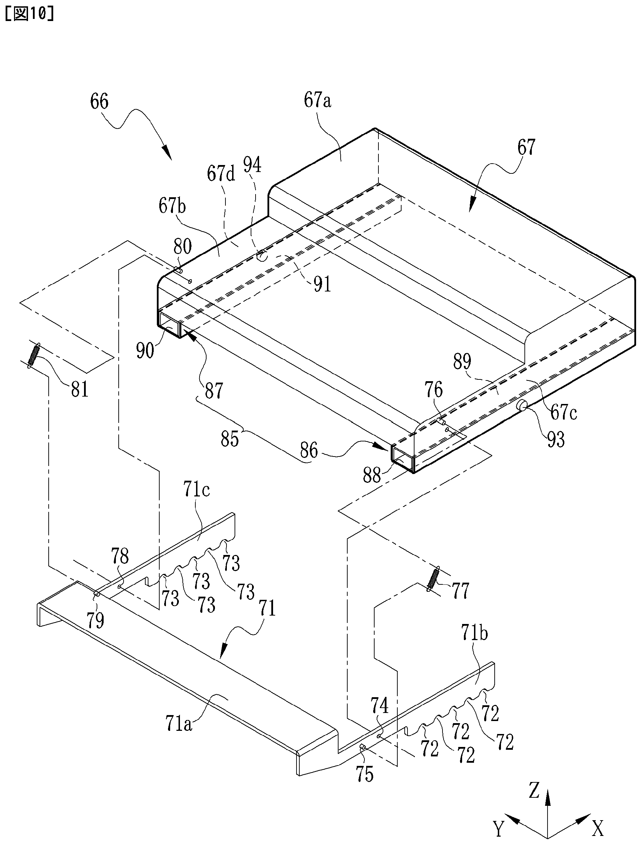

As shown in FIG. 10, a foot lever 71 disposed on the sliding-type heel pad 66 includes a footboard 71a, and supporting pieces 71b, 71c that are provided at both ends of the footboard 71a, extending in the X direction. The supporting piece 71b has plural groove portions 72 at the lower end of its tip end, which are arranged at predetermined intervals. Likewise, the supporting piece 71c has plural groove portions 73 at the lower end of its tip end, which are arranged at predetermined intervals. In the illustrated example of FIG. 10, the supporting pieces 71b, 71c have five groove portions 72, 73, respectively. In this embodiment as well, the two-step pad main body 67 with two footboards 67a, 67b at different heights is used.

The supporting piece 71b is attached in an axially turnable manner to a side surface 67c of the pad main body 67. Reference numeral 74 indicates an opening through which a fastener (not shown) is inserted when the supporting piece 71b is attached in an axially turnable manner to the side surface 67c of the pad main body 67. The supporting piece 71b is equipped with a pin 75 between the opening 74 and a portion continuous to the footboard 71a in the longitudinal direction of the supporting piece 71b. The side surface 67c of the pad main body 67 has a pin 76, and the coil spring 77 is connected to the pin 76 at one end and to the pin 75 at the other end.

Likewise, the supporting piece 71c is attached in an axially turnable manner to a side surface 67d of the pad main body 67. Reference numeral 78 indicates an opening through which a fastener (not shown) is inserted when the supporting piece 71c is attached in an axially turnable manner to the side surface 67d of the pad main body 67. The supporting piece 71c is equipped with a pin 79 between the opening 78 and a portion continuous to the footboard 71a in the longitudinal direction of the supporting piece 71c. The side surface 67d of the pad main body 67 has a pin 80, and the coil spring 81 is attached to the pin 80 at one end and to the pin 79 at the other end.

If the foot lever 71 is used, the sliding mechanism 85 is composed of, as in the above embodiment, two pairs of rails, i.e., rail pairs 86, 87. Here, the rail pair 86 is configured such that a pad-side rail 89 is inserted into a panel-side rail 88, and the rail pair 87 is configured such that a pad-side rail 91 is inserted into a panel-side rail 90. The side surface of the panel-side rail 88 has a pin 93 that is engageable with any one of the plural groove portions 72 formed in the supporting piece 71b. Furthermore, the side surface of the panel-side rail 90 has a pin 94 that is engageable with any one of the plural groove portions 72 formed in the supporting piece 71c.

Thus, if the foot lever 71 is used, the stopper mechanism is achieved by combining the supporting piece 71b and the pin 93 on the side surface of the panel-side rail 88, and combining the supporting piece 71c and the pin 94 on the side surface of the panel-side rail 90.

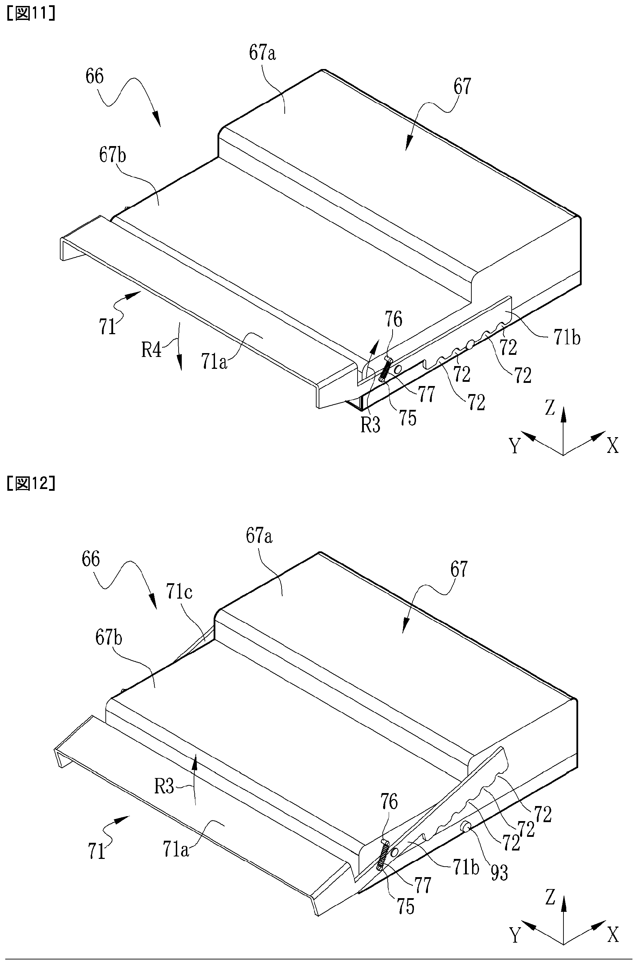

As shown in FIG. 11, in the sliding-type heel pad 70 with the foot lever 71, if the foot lever 71 is not operated, the supporting piece 71b is biased toward the R3 direction of FIG. 11 by the coil spring 77. It means that the pin 93 on the side surface of the panel-side rail 88 engages with any one of the plural groove portions 72 of the supporting piece 71b. Likewise, the supporting piece 71c is biased in the R3 direction by the coil spring 81. It means that the pin 94 on the side surface of the panel-side rail 90 engages with any one of the plural groove portions 73 of the supporting piece 71c.

Once a driver puts the heel on the footboard 71a of the foot lever 71 and pushes down the footboard 71a, the foot lever 71 is turned in the R4 direction. Upon the turning of the foot lever 71 in the R4 direction, the footboard 71a as well as the supporting pieces 71b, 71c are turned against the biasing force from the coil springs 77, 81 toward the R4 direction of FIG. 11. Accordingly, as shown in FIG. 12, the plural groove portions 72 formed in the supporting piece 71b are retracted from the pin 93 on the side surface of the panel-side rail 88 to thereby disengage a corresponding one of the plural groove portions 72 formed in the supporting piece 71b from the pin 93 disposed on the panel-side rail 88. Likewise, a corresponding one of the plural groove portions 73 formed in the supporting piece 71c is disengaged from the pin 94 disposed on the panel-side rail 90. Thus, the function of the stopper mechanism is disabled, whereby the pad main body 67 can slidably move.

After slidably moving the pad main body 67 to a desired position while pushing down the foot lever 71, a driver releases the foot from the footboard 71a of the foot lever 71. As described above, the supporting pieces 71b and 71c are biased in the R3 direction by the coil springs 77 and 81, respectively. Once the foot lever 71 is released from the foot, the supporting piece 71b is turned in the R3 direction by means of the biasing force from the coil spring 77. Hence, the foot lever 71 is turned in the R3 direction of FIG. 12. Here, if the pin 93 on the side surface of the panel-side rail 88 exists on the motion trajectory of any one of the plural groove portions 72 formed in the supporting piece 71b, the pin 93 can engage with the groove portion 72 that takes the motion trajectory on which the pin 93 exists, when the foot lever 71 is turned in the R3 direction. The same applies to the supporting piece 71c. The above engagement inhibits the foot lever 71 from turning in the R3 direction. As a result, the stopper mechanism functions to restrict the sliding movement of the pad main body 67.

Accordingly, in this embodiment as well, the position of the pad main body 67 and the height of the footboard can be easily adjusted only by slidably moving the pad main body 67 with the foot lever 71 being pushed down by the driver's foot as in the above embodiment. Also, if a driver wants to hold the pad main body 67 in a desired position, the driver has only to release the foot from the footboard of the foot lever 71. The driver can easily adjust the height of the footboard according to body form in this way.

## Claims

1. A sliding-type heel pad (15, 66) with height adjustment for a vehicle cabin, said sliding-type heel pad (15, 66) comprising:
a pad main body (20, 67) having an upper surface (20a, 20b, 67a, 67b) that varies in height, when the sliding type heel pad (15, 66) is placed on a floor panel (10) inside the vehicle cabin, from the floor panel (10) depending on a position at which a driver (C, D) touches the pad main body (20, 67) by heel;
a sliding mechanism (21, 85) for moving the pad main body (20, 67) toward or away from a pedal (14) disposed inside the cabin; and
a stopper mechanism (22, 71b, 71c, 93, 94) for restricting movement of the pad main body (20, 67) by the sliding mechanism (21, 85),
the sliding-type heel pad (15, 66) with height adjustment further comprising an operation part that cancels the restriction on the movement of the pad main body (20, 67) by the sliding mechanism (21, 85),
**characterized in**
**that** the operation part comprises an operation lever (40, 41, 42, 71a, 71b, 71c) that is oscillatably attached to the pad main body (20, 67) and allowed to be, via a depressible operation button (23) disposed on the pad main body (20), pushed down by the driver's foot,
wherein the sliding mechanism (21, 85) comprises first and second panel-side rails (27, 33, 88, 90) provided on opposite ends of the pad main body (20, 67) in a width direction and being adapted to be fixed to the floor panel (10),
wherein the stopper mechanism (22, 71b, 71c, 93, 94) comprises either plural locking pieces (30, 35) formed in the panel-side rail (27, 33) and at least one engagement hole (46, 52) arranged on the operation lever (40, 41) for engagement with one of the locking pieces (30, 35), or
plural groove portions (72, 73) arranged on the operation lever (71a, 71b, 71c) and an engagement pin (93, 94) arranged on the panel-side rail (88, 90) for engagement with one of the plural groove portions (72, 73), and
wherein, when the operation lever (40, 41, 42, 71a, 71b, 71c) is pushed down, the engagement hole (46, 52) or the plural groove portions (72, 73) is/are disengaged from the locking pieces (30, 35) or the engagement pin (93, 94) so as to allow sliding movement of the pad main body (20, 67).

2. The sliding-type heel pad (15, 66) with height adjustment function according to claim 1, wherein the operation part comprises an operation button (23) that is disposed on the pad main body (20, 67) and depressible by the driver's foot.

3. The sliding-type heel pad (15, 66) with height adjustment function according to any one of claims 1 to 2, wherein the upper surface (20a, 20b, 67a, 67b) of the pad main body (20, 67) comprises a surface that, when the sliding type heel pad (15, 66) is placed on the floor panel (10) between the pedal (14) and a driver's seat (11) inside the vehicle cabin, gradually decreases in height from the floor panel (10) from the pedal side to the driver's seat side.

4. The sliding-type heel pad (15, 66) with height adjustment function according to claim 3, wherein the upper surface (20a, 20b, 67a, 67b) of the pad main body (20, 67) comprises a step-like surface that is a combination of at least two or more surfaces at different heights from the floor panel (10).

## Patentansprüche

1. Verschiebbares Fersenpolster (15, 66) mit Höhenverstellung für eine Fahrzeugkabine, wobei das verschiebbare Fersenpolster (15, 66) Folgendes umfasst:
einen Polsterhauptkörper (20, 67), der eine obere Fläche (20a, 20b, 67a, 67b) aufweist, die in der Höhe, wenn das verschiebbare Fersenpolster (15, 66) auf eine Bodenplatte (10) innerhalb der Fahrzeugkabine platziert ist, von der Bodenplatte (10) je nach einer Position variiert, in der ein Fahrer (C, D) den Polsterhauptkörper (20, 67) mit der Ferse berührt;
einen Verschiebungsmechanismus (21, 85) zur Bewegung des Polsterhauptkörpers (20, 67) hin zu oder weg von einem Pedal (14), das innerhalb der Kabine angeordnet ist; und
einen Stoppermechanismus (22, 71b, 71c, 93, 94) zur Einschränkung der Bewegung des Polsterhauptkörpers (20, 67) durch den Verschiebungsmechanismus (21, 85),
wobei das verschiebbare Fersenpolster (15, 66) mit Höhenverstellung weiter einen Betriebsteil umfasst, der die Einschränkung der Bewegung des Polsterhauptkörpers (20, 67) durch den Verschiebungsmechanismus (21, 85) aufhebt,
**dadurch gekennzeichnet dass**
der Betriebsteil einen Betriebshebel (40, 41, 42, 71a, 71b, 71c) umfasst, der oszillierbar an den Polsterhauptkörper (20, 67) befestigt ist, und es möglich ist, dass er über einen drückbaren Betriebsknopf (23), der auf dem Polsterhauptkörper (20) angeordnet ist, durch den Fuß des Fahrers nach unten gedrückt wird,
wobei der Verschiebungsmechanismus (21, 85) erste und zweite Platten-Seitenschienen (27, 33, 88, 90) umfasst, die an einander gegenüberliegenden Enden des Polsterhauptkörpers (20, 67) in einer Breitenrichtung bereitgestellt und ausgelegt sind, um an die Bodenplatte (10) fixiert zu sein,
wobei der Stoppermechanismus (22, 71b, 71c, 93, 94) entweder zahlreiche Verriegelungsstücke (30, 35) umfasst, die in der Platten-Seitenschiene (27, 33) gebildet sind, und mindestens ein Eingriffsloch (46, 52), das auf dem Betriebshebel (40, 41) angeordnet ist, um mit einem der Verriegelungsstücke (30, 35), einzugreifen, oder
zahlreiche Nutabschnitte (72, 73), die auf dem Betriebshebel (71a, 71b, 71c) angeordnet sind, und ein Eingriffsstift (93, 94), der auf der Platten-Seitenschiene (88, 90) angeordnet ist, um mit einem der zahlreichen Nutenabschnitte (72, 73) einzugreifen, und
wobei, wenn der Betriebshebel (40, 41, 42, 71a, 71b, 71c) nach unten gedrückt ist, das Eingriffsloch (46, 52) oder die zahlreichen Nutabschnitte (72, 73) von den Verriegelungsstücken (30, 35) oder dem Eingriffsstift (93, 94) gelöst ist/sind, um eine Verschiebungsbewegung des Polsterhauptkörpers (20, 67) zu ermöglichen.

2. Verschiebbares Fersenpolster (15, 66) mit Höhenverstellungsfunktion nach Anspruch 1, wobei der Betriebsteil einen Betriebsknopf (23) umfasst, der auf dem Polsterhauptkörper (20, 67) angeordnet und durch den Fuß des Fahrers nach unten gedrückt werden kann.

3. Verschiebbares Fersenpolster (15, 66) mit Höhenverstellungsfunktion nach einem der Ansprüche 1 bis 2, wobei die obere Fläche (20a, 20b, 67a, 67b) des Polsterhauptkörpers (20, 67) eine Fläche umfasst, die, wenn das verschiebbare Fersenpolster (15, 66) auf die Bodenplatte (10) zwischen das Pedal (14) und einen Fahrersitz (11) innerhalb der Fahrzeugkabine platziert wird, allmählich in der Höhe von der Bodenplatte (10) von der Pedalseite zur Fahrersitzseite abnimmt.

4. Verschiebbares Fersenpolster (15, 66) mit Höhenverstellungsfunktion nach Anspruch 3, wobei die obere Fläche (20a, 20b, 67a, 67b) des Polsterhauptkörpers (20, 67) eine stufenähnliche Fläche umfasst, die eine Kombination von mindestens zwei oder mehreren Flächen auf verschiedenen Höhen von der Bodenplatte (10) darstellt.

## Revendications

1. Support de talon de type coulissant (15, 66) à réglage de hauteur pour une cabine de véhicule, ledit support de talon de type coulissant (15, 66) comprenant :
un corps principal de support (20, 67) présentant une surface supérieure (20a, 20b, 67a, 67b) qui varie en hauteur, quand le support de talon de type coulissant (15, 66) est placé sur un panneau de plancher (10) à l'intérieur de la cabine de véhicule, depuis le panneau de plancher (10) en fonction d'une position dans laquelle un conducteur (C, D) touche le corps principal de support (20, 67) par le talon ;
un mécanisme de coulissement (21, 85) pour déplacer le corps principal de support (20, 67) vers ou loin d'une pédale (14) disposée à l'intérieur de la cabine ; et
un mécanisme de butée (22, 71b, 71c, 93, 94) pour limiter le déplacement du corps principal de support (20, 67) par le mécanisme de coulissement (21, 85),
le support de talon de type coulissant (15, 66) à réglage de hauteur comprenant en outre une partie d'actionnement qui annule la limitation imposée sur le déplacement du corps principal de support (20, 67) par le mécanisme de coulissement (21, 85),
**caractérisé en ce**
**que** la partie d'actionnement comprend un levier d'actionnement (40, 41, 42, 71a, 71b, 71c) qui est fixé de manière oscillante au corps principal de support (20, 67) et autorisé à être, par le biais d'un bouton d'actionnement enfonçable (23) disposé sur le corps principal de support (20), appuyé par le pied du conducteur,
dans lequel le mécanisme de coulissement (21, 85) comprend des premier et second rails côté panneau (27, 33, 88, 90) situés sur des extrémités opposées du corps principal de support (20, 67) dans une direction de largeur et étant adaptés pour être fixés au panneau de plancher (10),
dans lequel le mécanisme de butée (22, 71b, 71c, 93, 94) comprend
soit plusieurs pièces de verrouillage (30, 35) formées dans le rail côté panneau (27, 33) et au moins un trou de mise en prise (46, 52) agencé sur le levier d'actionnement (40, 41) pour mise en prise avec l'une des pièces de verrouillage (30, 35),
soit plusieurs portions rainures (72, 73) agencées sur le levier d'actionnement (71a, 71b, 71c) et une broche de mise en prise (93, 94) agencée sur le rail côté panneau (88, 90) pour mise en prise avec l'une de la pluralité de portions rainures (72, 73), et
dans lequel, lorsque le levier d'actionnement (40, 41, 42, 71a, 71b, 71c) est appuyé, le trou de mise en prise (46, 52) ou la pluralité de portions rainures (72, 73) est/sont désolidarisé(es) des pièces de verrouillage (30, 35) ou de la broche de mise en prise (93, 94) de manière à permettre un déplacement coulissant du corps principal de support (20, 67).

2. Support de talon de type coulissant (15, 66) à fonction de réglage de hauteur selon la revendication 1, dans lequel la partie d'actionnement comprend un bouton d'actionnement (23) qui est disposé sur le corps principal de support (20, 67) et peut être enfoncé par le pied du conducteur.

3. Support de talon de type coulissant (15, 66) à fonction de réglage de hauteur selon l'une quelconque des revendications 1 à 2, dans lequel la surface supérieure (20a, 20b, 67a, 67b) du corps principal de support (20, 67) comprend une surface qui, lorsque le support de talon de type coulissant (15, 66) est placé sur la panneau de plancher (10) entre la pédale (14) et un siège (11) du conducteur à l'intérieur de la cabine de véhicule, diminue progressivement en hauteur depuis le panneau de plancher (10) du côté pédale vers le côté siège du conducteur.

4. Support de talon de type coulissant (15, 66) à fonction de réglage de hauteur selon la revendication 3, dans lequel la surface supérieure (20a, 20b, 67a, 67b) du corps principal de support (20, 67) comprend une surface de type étagée qui est une combinaison d'au moins deux surfaces ou plus à différentes hauteurs du panneau de plancher (10).
